# EUROPÄISCHE PATENTSCHRIFT

(11) **EP 4 155 138 B1**
(45) Veröffentlichungstag und Bekanntmachung des Hinweises auf die Patenterteilung: **02.04.2025**
(21) Anmeldenummer: 22186615.5
(22) Anmeldetag: 25.07.2022
(51) Int. Cl.: B60R 25/021, B62D 5/04, B60R 25/0215

(54) **STEER-BY-WIRE-LENKSYSTEM UND VERFAHREN ZUM DIEBSTAHLSCHUTZ EINES KRAFTFAHRZEUGS MIT EINEM STEER-BY-WIRE-LENKSYSTEM**
STEER-BY-WIRE STEERING SYSTEM AND METHOD FOR PREVENTING THE THEFT OF A MOTOR VEHICLE WITH A STEER-BY-WIRE STEERING SYSTEM
SYSTÈME DE DIRECTION À COMMANDE PAR CÂBLE ET PROCÉDÉ DE PROTECTION CONTRE LE VOL D'UN VÉHICULE DOTÉ D'UN SYSTÈME DE DIRECTION À COMMANDE PAR CÂBLE

(30) Priorität: 24.09.2021 DE 102021210709
(43) Veröffentlichungstag der Anmeldung: 29.03.2023
(73) Patentinhaber: VOLKSWAGEN AG, 38440 Wolfsburg (DE)
(72) Erfinder: NIPPOLD, Christoph, 38110 Braunschweig (DE); DREYER, Dirk, 31655 Stadthagen (DE); VOLKMER, Heiko, 38162 Cremlingen (DE)

(56) Entgegenhaltungen:
- DE-A1- 102008 018 560
- DE-A1- 102013 109 527
- DE-A1- 102017 218 830
- US-A1- 2016 368 528
- US-A1- 2020 269 907
- US-B1- 6 268 790
- US-B2- 9 505 428

## Beschreibung

Die Erfindung betrifft ein Steer-by-Wire-Lenksystem und ein Verfahren zum Diebstahlschutz eines Kraftfahrzeugs mit einem Steer-by-Wire-Lenksystem.

Aus der DE 10 2017 218 830 A1 ist ein Verfahren zum Verzögern eines Servomotors einer Lenkvorrichtung bekannt, insbesondere zum Schutz in einer Wartungsbetriebssituation und/oder zur Diebstahlsicherung, wobei die Lenkvorrichtung zumindest eine Steuereinheit umfasst, welche dazu vorgesehen ist, in einem Normalbetriebsmodus zumindest ein Unterstützungsmoment des Servomotors einzustellen, wobei eine durch eine externe Kraft hervorgerufene Bewegung des Servomotors durch Auswerten einer mit der Bewegung des Servomotors korrelierten Bewegungskenngröße überwacht und in deren Abhängigkeit ein Verzögerungsvorgang ausgelöst wird, bei welchem der Servomotor mittels der Steuereinheit verzögert wird. Dabei wird die Steuereinheit in dem Betriebszustand zur Durchführung des Verzögerungsvorgangs in einen speziellen Verzögerungsbetriebsmodus versetzt, in dem wenigstens eine in dem Normalbetriebsmodus aktivierte Betriebsfunktion der Steuereinheit deaktiviert und/oder der Steuereinheit nicht zugänglich ist. Die Lenkvorrichtung kann dabei auch als Steer-by-Wire-Lenksystem ausgebildet sein.

Aus der DE 10 2004 004 537 A1 ist ein Verfahren zur Lenkunterstützung eines Kraftfahrzeugs bekannt, wobei im Normalbetrieb Lenkanweisungen in einem entsprechenden Lenkwinkel von gelenkten Rädern des Kraftfahrzeugs umgesetzt werden, wobei aktiv unabhängig von den Lenkanweisungen auf den Lenkwinkel eingewirkt wird, wenn ein Betrieb des Kraftfahrzeugs durch eine nichtberechtigte Bedienperson erfasst worden ist.

Aus der DE 10 2010 028 101 A1 ist ein Verfahren zum Blockieren eines Lenksystems bekannt, das mit einem Synchronmotor zur Lenkunterstützung ausgestattet ist, wobei mindestens zwei Phasen des Synchronmotors kurzgeschlossen werden.

Aus der US 2020/269907 A1 ist ein gattungsgemäßes Steer-by-Wire-Lenksystem bekannt. Aus der DE 10 2013 109 527 A1 ist ein Verfahren zum Betrieb eines Lenksystems in einem Fahrzeug mit einem Elektromotor zur Erzeugung eines die Lenkbewegung unterstützenden Momentes bekannt, das in Abhängigkeit einer sensorisch ermittelten Lenkbetätigung eingestellt wird, wobei zur Realisierung einer Lenkradverriegelung ein einer Lenkbetätigung entgegengesetztes Moment erzeugt wird.

Der Erfindung liegt das technische Problem zugrunde, ein Steer-by-Wire-Lenksystem zu schaffen, bei dem der Diebstahlschutz verbessert ist sowie ein geeignetes Verfahren zur Verfügung zu stellen.

Die Lösung des technischen Problems ergibt sich durch ein Steer-by-Wire-Lenksystem mit den Merkmalen des Anspruchs 1 sowie ein Verfahren mit den Merkmalen des Anspruchs 6. Weitere vorteilhafte Ausgestaltungen der Erfindung ergeben sich aus den Unteransprüchen.

Das Steer-by-Wire-Lenksystem umfasst ein Lenksäulenmodul und ein Lenkgetriebe. Das Lenksäulenmodul weist mindestens einen Drehwinkelsensor zur Erfassung eines Lenkraddrehwinkels an einer Lenkhandhabe, einen Aktor zur Erzeugung eines Gegenmoments an der Lenkhandhabe und mindestens ein Steuergerät auf. Der Aktor ist vorzugsweise als Elektromotor ausgebildet. Das Lenkgetriebe weist mindestens ein Steuergerät, eine Aktorik zur Erzeugung einer Zahnstangenkraft auf eine Zahnstange und mindestens eine Sensorik zur Erfassung oder Ermittlung einer Zahnstangenposition auf, wobei die Steuergeräte datentechnisch verbunden sind, beispielsweise über ein Bussystem wie z.B. ein CAN-Bussystem.

Dabei ist das Steuergerät des Lenkgetriebes derart ausgebildet, periodisch und/oder situativ im abgestellten Zustand des Kraftfahrzeugs aufzuwachen und eine aktuelle Zahnstangenposition zu erfassen oder zu ermitteln, die dann mit einer vorangegangenen Zahnstangenposition verglichen wird (bei Abstellung des Kraftfahrzeugs oder dem letzten Aufwachzyklus), wobei bei einer Veränderung der Zahnstangenposition das Steuergerät den Aktor des Lenkgetriebes derart ansteuert, dass dieser die aktuelle Zahnstangenposition oder eine andere vorbestimmte Zahnstangenposition mit maximaler Zahnstangenkraft hält. Heutige Lenkgetriebe können beispielsweise bis zu 9.500 N Zahnstangenkraft aufbringen. Auch hier wird die Zahnstangenposition fixiert bzw. verriegelt, sodass ein Lenken nicht mehr möglich ist. Hinsichtlich der Reaktionszeiten gilt, dass beispielsweise 5 ms nach dem Aufwecken eine Änderung der Zahnstangenposition erfasst wird und insgesamt 20 ms die Verriegelung erfolgt. Somit kann mit nur geringfügigen Software-Veränderungen ein wirksamer Diebstahlschutz realisiert werden.

In einer Ausführungsform ist das Steuergerät des Lenksäulenmoduls derart ausgebildet, periodisch und/oder situativ (also ereignisgesteuert) im abgestellten Zustand des Kraftfahrzeugs aufzuwachen und einen aktuellen Lenkraddrehwinkel zu erfassen und mit einem vorangegangenen Lenkraddrehwinkel zu vergleichen. Dieser vorangegangene Lenkraddrehwinkel ist beispielsweise der Lenkraddrehwinkel, der vorlag, als das Kraftfahrzeug abgestellt wurde oder beim letzten Aufwachvorgang gemessen wurde. Bei einer Veränderung des Lenkraddrehwinkels (vorangegangener zu aktuellem) steuert das Steuergerät den Aktor des Lenksäulenmoduls derart an, dass dieser den aktuellen Lenkraddrehwinkel oder einen anderen vorbestimmten Lenkraddrehwinkel mit maximalem Drehmoment hält. Wird dann versucht, an der Lenkhandhabe einen anderen Lenkraddrehwinkel einzustellen, steuert der Aktor dagegen. Der aktuelle Lenkraddrehwinkel oder der vorbestimmte Lenkraddrehwinkel wird also fixiert bzw. verriegelt. Dabei kann der Aktor beispielsweise mit bis zu 35 Nm gegen ein Handmoment an der Lenkhandhabe gegenwirken, sodass das Kraftfahrzeug kaum lenkbar ist. Dabei ist der Vorgang relativ schnell. Beispielsweise wird eine Veränderung des Lenkraddrehwinkels ca. 5 ms nach dem Aufwecken erfasst, wobei nach insgesamt 20 ms die Verriegelung erfolgt.

In einer weiteren Ausführungsform ist das Steuergerät des Lenksäulenmoduls derart ausgebildet, einen Steuerbefehl an das Steuergerät des Lenkgetriebes zu übermitteln, um eine Zahnstangenposition zu verriegeln, und/oder ist das Steuergerät des Lenkgetriebes derart ausgebildet, einen Steuerbefehl an das Steuergerät des Lenksäulenmoduls zu übermitteln, um einen Lenkraddrehwinkel zu verriegeln. Hierdurch wird der Diebstahlschutz weiter verbessert, da jeweils beide Aktoren ihre zugeordneten Winkel verriegeln.

In einer weiteren Ausführungsform sind die Steuergeräte derart ausgebildet, verschlüsselt miteinander zu kommunizieren, um so Software-Manipulationen zu verhindern bzw. zu erschweren.

In einer weiteren Ausführungsform sind die Versorgungsspannungsanschlüsse des Aktors des Lenksäulenmoduls und/oder des Aktors des Lenkgetriebes derart ausgebildet, dass diese ohne gesteckten Versorgungsspannungsstecker kurzgeschlossen sind. Wird also versucht, die Verriegelung durch ziehen der Versorgungsspannungsstecker zu überbrücken, so wird durch den Kurzschluss sichergestellt, dass die Aktoren maximal schwergängig sind, da eine Bewegung jeweils Kurzschlussströme erzeugt, deren resultierenden elektromagnetischen Kräfte der Bewegung entgegenwirken.

Hinsichtlich der verfahrensmäßigen Ausgestaltung wird vollinhaltlich auf die vorangegangenen Ausführungen Bezug genommen.

Die Erfindung wird nachfolgend anhand eines bevorzugten Ausführungsbeispiels näher erläutert. Die einzige Figur zeugt ein schematisches Blockschaltbild eines Steer-by-Wire-Lenksystems.

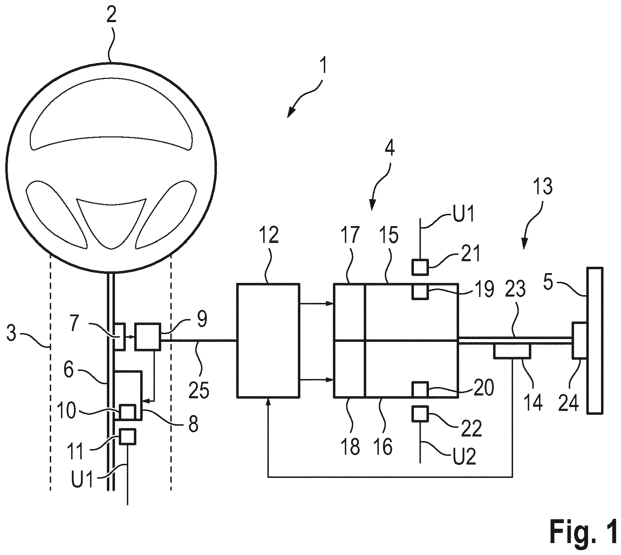

Das in Fig. 1 dargestellte Steer-by-Wire-Lenksystem 1 weist eine Lenkhandhabe 2, ein Lenksäulenmodul 3 und ein Lenkgetriebe 4 auf, das mit einer Zahnstange 5 verbunden ist. Die Lenkhandhabe 2 ist beispielsweise als Lenkrad ausgebildet und mit einer Lenksäule 6 im Lenksäulenmodul 3 verbunden. Weiter weist das Lenksäulenmodul 3 mindestens einen Drehwinkelsensor 7, einen Aktor 8 und ein Steuergerät 9 auf. Der Drehwinkelsensor 7 und der Aktor 8 sind dabei an der Lenksäule 6 angeordnet, wobei der Drehwinkelsensor 7 einen Lenkraddrehwinkel an der Lenkhandhabe 2 erfasst und dem Steuergerät 9 übermittelt. Der Aktor 8 erzeugt ein Gegenmoment an der Lenksäule 6, das an der Lenkhandhabe 2 als Gegenmoment spürbar ist. Der Aktor 8 ist vorzugsweise als Elektromotor ausgebildet und wird auch als Force-Feedback-Aktor bezeichnet. Der Aktor 8 weist einen Versorgungsspannungsanschluss 10 auf, in den ein Versorgungsspannungsstecker 11 eingesteckt werden kann, um den Aktor 8 mit einer Spannung U1 zu versorgen.

Das Lenkgetriebe 4 weist ein Steuergerät 12, einen Aktor 13 und eine Sensorik 14 zur Erfassung oder Ermittlung einer Zahnstangenposition auf. Der Aktor 13 weist zwei Halbmotoren 15, 16 auf, denen jeweils eine eigene Leistungselektronik 17, 18 zugeordnet ist. Die Halbmotoren 15, 16 sowie ihre Leistungselektroniken 17, 18 weisen jeweils eine unabhängige Spannungsversorgung U1 bzw. U2 auf. Dabei sind jeweils Versorgungsspannungsanschlüsse 19, 20 vorhanden, in die Versorgungsspannungsstecker 21, 22 eingesteckt werden können, die in Fig. 1 im ungesteckten Zustand dargestellt sind. Die beiden Halbmotoren 15, 16 arbeiten auf einem gemeinsamen Rotor 23, der über ein Getriebe 24 mit der Zahnstange 5 verbunden ist. Dem Rotor 23 ist die Sensorik 14 zugeordnet, die als Rotorlagesensor ausgebildet ist. Anhand der Signale des Rotorlagesensors und der bekannten Übersetzung des Getriebes 24 kann dann das Steuergerät 12 die Zahnstangenposition ermitteln. Die Steuergeräte 9, 12 sind über ein Bussystem 25 miteinander verbunden, wobei die Kommunikation verschlüsselt ist.

Das Steuergerät 9 und/oder das Steuergerät 12 sind nun derart ausgebildet, dass diese periodisch und/oder situativ im abgestellten Zustand des Kraftfahrzeuges aufwachen. Dies soll nun anhand des Steuergeräts 9 erläutert werden. Das Steuergerät 9 wacht auf und erhält den aktuellen Lenkraddrehwinkel vom Drehwinkelsensor 7. Das Steuergerät 9 vergleicht diesen aktuellen Lenkraddrehwinkel mit einem vorangegangenen Lenkraddrehwinkel (z.B. dem Lenkraddrehwinkel beim Abstellen des Kraftfahrzeugs oder den vom letzten Aufwachzyklus). Bei einer Veränderung geht das Steuergerät 9 von einem Diebstahlversuch aus und steuert den Aktor 8 derart an, dass dieser den aktuellen Lenkraddrehwinkel oder einen anderen vorbestimmten Lenkraddrehwinkel hält. Wird dann versucht, die Lenkhandhabe zu drehen, so arbeitet der Aktuator 8 dagegen, um die Position zu halten. Dabei kann der Aktor 8 beispielsweise maximal 35 Nm aufbringen, die kaum zu überlenken sind. Gleichzeitig sendet das Steuergerät 9 an das Steuergerät 12 einen Steuerbefehl, dass der Aktor 13 die aktuelle Zahnstangenposition verriegelt, also mit maximaler Zahnstangenkraft gegen äußere Kräfte in der Position hält. Sollte das Steuergerät 12 zuvor geschlafen haben, so wird dieses durch den Steuerbefehl des Steuergeräts 9 geweckt.

Entsprechend ist der Ablauf, wenn das Steuergerät 12 periodisch und/oder situativ aufgeweckt wird.

Als weitere Schutzmaßnahme sind die Versorgungsspannungsanschlüsse 10, 19, 20 der Aktoren 8, 13 derart ausgebildet, dass diese ohne gesteckten Versorgungsspannungsstecker 11, 21, 22 kurzgeschlossen sind.

### Bezugszeichenliste

- 1: Steer-by-Wire-Lenksystem
- 2: Lenkhandhabe
- 3: Lenksäulenmodul
- 4: Lenkgetriebe
- 5: Zahnstange
- 6: Lenksäule
- 7: Drehwinkelsensor
- 8: Aktor
- 9: Steuergerät
- 10: Versorgungsspannungsanschluss
- 11: Versorgungsspannungsstecker
- 12: Steuergerät
- 13: Aktor
- 14: Sensorik
- 15, 16: Halbmotor
- 17, 18: Leistungselektronik
- 19, 20: Versorgungsspannungsanschluss
- 21, 22: Versorgungsspannungsstecker
- 23: Rotor
- 24: Getriebe
- 25: Bussystem

## Patentansprüche

1. Steer-by-Wire-Lenksystem (1), umfassend ein Lenksäulenmodul (3) und ein Lenkgetriebe (4), wobei das Lenksäulenmodul (3) mindestens einen Drehwinkelsensor (7) zur Erfassung eines Lenkraddrehwinkels an einer Lenkhandhabe (2), einen Aktor (8) zur Erzeugung eines Gegenmoments an der Lenkhandhabe (2) und mindestens ein Steuergerät (9) aufweist, und wobei das Lenkgetriebe (4) mindestens ein Steuergerät (12), einen Aktor (13) zur Erzeugung einer Zahnstangenkraft auf eine Zahnstange (5) und mindestens eine Sensorik (14) zur Erfassung oder Ermittlung einer Zahnstangenposition aufweist, wobei die Steuergeräte (9, 12) datentechnisch verbunden sind,
**dadurch gekennzeichnet, dass**
das Steuergerät (12) des Lenkgetriebes (4) derart ausgebildet ist, periodisch und/oder situativ im abgestellten Zustand aufzuwachen und eine aktuelle Zahnstangenposition zu erfassen oder zu ermitteln, wobei bei einer Veränderung der Zahnstangenposition das Steuergerät (12) den Aktor (13) des Lenkgetriebes (4) derart ansteuert, dass dieser die aktuelle Zahnstangenposition oder eine andere vorbestimmte Zahnstangenposition mit maximaler Zahnstangenkraft hält.

2. Steer-by-Wire-Lenksystem nach Anspruch 1, **dadurch gekennzeichnet, dass** das Steuergerät (9) des Lenksäulenmoduls (3) derart ausgebildet ist, periodisch und/oder situativ im abgestellten Zustand aufzuwachen und einen aktuellen Lenkraddrehwinkel zu erfassen, wobei bei einer Veränderung des Lenkraddrehwinkels das Steuergerät (9) den Aktor (8) des Lenksäulenmoduls (3) derart ansteuert, dass dieser den aktuellen Lenkraddrehwinkel oder einen anderen vorbestimmten Lenkraddrehwinkel mit maximalem Drehmoment hält.

3. Steer-by-Wire-Lenksystem nach Anspruch 1 oder 2, **dadurch gekennzeichnet, dass** das Steuergerät (9) des Lenksäulenmoduls (3) derart ausgebildet ist, einen Steuerbefehl an das Steuergerät (12) des Lenkgetriebes (4) zu übermitteln, um eine Zahnstangenposition zu verriegeln und/oder
das Steuergerät (12) des Lenkgetriebes (4) derart ausgebildet ist, einen Steuerbefehl an das Steuergerät (9) des Lenksäulenmoduls (3) zu übermitteln, um einen Lenkraddrehwinkel zu verriegeln.

4. Steer-by-Wire-Lenksystem nach Anspruch 3, **dadurch gekennzeichnet, dass** die Steuergeräte (9, 12) derart ausgebildet sind, verschlüsselt miteinander zu kommunizieren.

5. Steer-by-Wire-Lenksystem nach einem der vorangegangenen Ansprüche, **dadurch gekennzeichnet, dass** Versorgungsspannungsanschlüsse (10, 19, 20) des Aktors (8) des Lenksäulenmoduls (3) und/oder des Aktors (13) des Lenkgetriebes (4) derart ausgebildet sind, dass diese ohne gesteckten Versorgungsspannungsstecker (11, 21, 22) kurzgeschlossen sind.

6. Verfahren zum Diebstahlschutz eines Kraftfahrzeugs mit einem Steer-by-Wire-Lenksystem (1), wobei das Steer-by-Wire-Lenksystem (1) ein Lenksäulenmodul (3) und ein Lenkgetriebe (4) umfasst, wobei das Lenksäulenmodul (3) mindestens einen Drehwinkelsensor (7) zur Erfassung eines Lenkraddrehwinkels an einer Lenkhandhabe (2), einen Aktor (8) zur Erzeugung eines Gegenmoments an der Lenkhandhabe (2) und mindestens ein Steuergerät (9) aufweist, und wobei das Lenkgetriebe (4) mindestens ein Steuergerät (12), eine Aktorik (13) zur Erzeugung einer Zahnstangenkraft auf eine Zahnstange und mindestens eine Sensorik (14) zur Erfassung oder Ermittlung einer Zahnstangenposition aufweist, wobei die Steuergeräte (9, 12) datentechnisch verbunden sind,
**dadurch gekennzeichnet, dass**
das Steuergerät (12) des Lenkgetriebes (4) periodisch und/oder situativ im abgestellten Zustand des Kraftfahrzeugs aufwacht und eine aktuelle Zahnstangenposition mittels der Sensorik (14) erfasst oder ermittelt und mit einer vorangegangenen Zahnstangenposition vergleicht, wobei bei einer Veränderung der Zahnstangenposition das Steuergerät (12) den Aktor (13) des Lenkgetriebes (4) derart ansteuert, dass dieser die aktuelle Zahnstangenposition oder eine andere vorbestimmte Zahnstangenposition mit maximaler Zahnstangenkraft hält.

7. Verfahren nach Anspruch 6, **dadurch gekennzeichnet, dass** das Steuergerät (9) des Lenksäulenmoduls (3) periodisch und/oder situativ im abgestellten Zustand des Kraftfahrzeugs aufwacht und einen aktuellen Lenkraddrehwinkel des Drehwinkelsensors (7) erfasst und mit einem vergangenen Lenkraddrehwinkel vergleicht, wobei bei einer Veränderung des Lenkraddrehwinkels das Steuergerät (9) den Aktor (8) des Lenksäulenmoduls (3) derart ansteuert, dass dieser den aktuellen Lenkraddrehwinkel oder einen anderen vorbestimmten Lenkraddrehwinkel mit maximalen Drehmoment hält

8. Verfahren nach Anspruch 6 oder 7, **dadurch gekennzeichnet, dass** das Steuergerät (9) des Lenksäulenmoduls (3) einen Steuerbefehl an das Steuergerät (12) des Lenkgetriebes (4) übermittelt, um eine Zahnstangenposition zu verriegeln und/oder das Steuergerät (12) des Lenkgetriebes (4) einen Steuerbefehl an das Steuergerät (9) des Lenksäulenmoduls (3) übermittelt, um einen Lenkraddrehwinkel zu verriegeln.

9. Verfahren nach Anspruch 8, **dadurch gekennzeichnet, dass** die Steuergeräte (9, 12) verschlüsselt miteinander kommunizieren.

10. Verfahren nach einem der Ansprüche 6 bis 9, **dadurch gekennzeichnet, dass** durch Abziehen eines Versorgungsspannungssteckers (11, 21, 22) aus einem Versorgungsspannungsanschluss (10, 19, 20) des Aktors (8) des Lenksäulenmoduls (3) und/oder des Aktors (13) des Lenkgetriebes (4) die Versorgungsspannungsanschlüsse (01, 19, 20) automatisch kurzgeschlossen werden.

## Claims

1. Steer-by-wire steering system (1), comprising a steering column module (3) and a steering mechanism (4), the steering column module (3) having at least one rotational angle sensor (7) for detecting a steering wheel rotational angle on a steering handle (2), an actuator (8) for generating a counter torque on the steering handle (2) and at least one control unit (9), and the steering mechanism (4) having at least one control unit (12), an actuator (13) for generating a rack force on a rack (5) and at least one sensor system (14) for detecting or determining a rack position, the control units (9, 12) being connected for data transmission,
**characterized in that**
the control unit (12) of the steering mechanism (4) is designed such that it wakes up periodically and/or situationally in the parked state and detects or determines a current rack position, wherein, in the case of a change in the rack position, the control unit (12) controls the actuator (13) of the steering mechanism (4) such that the actuator maintains the current rack position or a different predetermined rack position with maximum rack force.

2. Steer-by-wire steering system according to claim 1, **characterized in that** the control unit (9) of the steering column module (3) is designed such that it wakes up periodically and/or situationally in the parked state and detects a current steering wheel rotational angle, wherein, in the case of a change in the steering wheel rotational angle, the control unit (9) controls the actuator (8) of the steering column module (3) such that the actuator maintains the current steering wheel rotational angle or a different predetermined steering wheel rotational angle with maximum torque.

3. Steer-by-wire steering system according to claim 1 or claim 2,
**characterized in that** the control unit (9) of the steering column module (3) is designed such that it transmits a control command to the control unit (12) of the steering mechanism (4) in order to lock a rack position and/or
the control unit (12) of the steering mechanism (4) is designed such that it transmits a control command to the control unit (9) of the steering column module (3) in order to lock a steering wheel rotational angle.

4. Steer-by-wire steering system according to claim 3, **characterized in that** the control units (9, 12) are designed such that they communicate with one another in an encrypted manner.

5. Steer-by-wire steering system according to any of the preceding claims, **characterized in that** supply voltage connections (10, 19, 20) of the actuator (8) of the steering column module (3) and/or of the actuator (13) of the steering mechanism (4) are designed such that they are short-circuited without a plugged-in supply voltage plug (11, 21, 22).

6. Method for theft protection for a motor vehicle comprising a steer-by-wire steering system (1), the steer-by-wire steering system (1) comprising a steering column module (3) and a steering mechanism (4), the steering column module (3) having at least one rotational angle sensor (7) for detecting a steering wheel rotational angle on a steering handle (2), an actuator (8) for generating a counter torque on the steering handle (2) and at least one control unit (9), and the steering mechanism (4) having at least one control unit (12), an actuator system (13) for generating a rack force on a rack and at least one sensor system (14) for detecting or determining a rack position, the control units (9, 12) being connected for data transmission,
**characterized in that**
the control unit (12) of the steering mechanism (4) wakes up periodically and/or situationally when the motor vehicle is in the parked state and detects or determines a current rack position by means of the sensor system (14) and compares the current rack position with a previous rack position, wherein, in the case of a change in the rack position, the control unit (12) controls the actuator (13) of the steering mechanism (4) such that the actuator maintains the current rack position or a different predetermined rack position with maximum rack force.

7. Method according to claim 6, **characterized in that** the control unit (9) of the steering column module (3) wakes up periodically and/or situationally when the motor vehicle is in the parked state and detects a current steering wheel rotational angle of the rotational angle sensor (7) and compares the current rotational angle with a previous steering wheel rotational angle, wherein, in the case of a change in the steering wheel rotational angle, the control unit (9) controls the actuator (8) of the steering column module (3) such that the actuator maintains the current steering wheel notional angle or a different predetermined steering wheel rotational angle with maximum torque.

8. Method according to claim 6 or claim 7, **characterized in that** the control unit (9) of the steering column module (3) transmits a control command to the control unit (12) of the steering mechanism (4) in order to lock a rack position and/or
the control unit (12) of the steering mechanism (4) transmits a control command to the control unit (9) of the steering column module (3) in order to lock a steering wheel rotational angle.

9. Method according to claim 8, **characterized in that** the control units (9, 12) communicate with one another in an encrypted manner.

10. Method according to any of claims 6 to 9, **characterized in that** by removing a supply voltage plug (11, 21, 22) from a supply voltage connection (10, 19, 20) of the actuator (8) of the steering column module (3) and/or the actuator (13) of the steering mechanism (4), the supply voltage connections (01, 19, 20) are automatically short-circuited.

## Revendications

1. Système de direction à commande électrique (1), comprenant un module de colonne de direction (3) et un mécanisme de direction (4), dans lequel le module de colonne de direction (3) présente au moins un capteur d'angle de rotation (7) pour détecter un angle de rotation de volant de direction sur une manette de direction (2), un actionneur (8) pour générer un couple antagoniste sur la manette de direction (2) et au moins un appareil de commande (9), et dans lequel le mécanisme de direction (4) présente au moins un appareil de commande (12), un actionneur (13) pour générer une force de crémaillère sur une crémaillère (5) et au moins un système de capteurs (14) pour détecter ou déterminer une position de crémaillère, dans lequel les appareils de commande (9, 12) sont reliés par des techniques de données,
**caractérisé en ce que**
l'appareil de commande (12) du mécanisme de direction (4) est conçu de telle sorte qu'il se réveille périodiquement et/ou en fonction de la situation à l'état arrêté et qu'il détecte ou détermine une position de crémaillère actuelle, dans lequel l'appareil de commande (12) commande l'actionneur (13) du mécanisme de direction (4) lors d'une modification de la position de crémaillère de telle sorte que celui-ci maintient la position de crémaillère actuelle ou une autre position de crémaillère prédéterminée avec une force de crémaillère maximale.

2. Système de direction à commande électrique selon la revendication 1, **caractérisé en ce que** l'appareil de commande (9) du module de colonne de direction (3) est conçu de telle sorte qu'il se réveille périodiquement et/ou en fonction de la situation à l'état arrêté et qu'il détecte un angle de rotation de volant de direction actuel, dans lequel l'appareil de commande (9) commande l'actionneur (8) du module de colonne de direction (3) lors d'une modification de l'angle de rotation de volant de direction de telle sorte que celui-ci maintient l'angle de rotation de volant de direction actuel ou un autre angle de rotation de volant de direction prédéterminé avec un couple maximal.

3. Système de direction à commande électrique selon la revendication 1 ou 2, **caractérisé en ce que** l'appareil de commande (9) du module de colonne de direction (3) est conçu de telle sorte qu'il transmet un ordre de commande à l'appareil de commande (12) du mécanisme de direction (4) pour verrouiller une position de crémaillère et/ou
l'appareil de commande (12) du mécanisme de direction (4) est conçu de telle sorte qu'il transmet un ordre de commande à l'appareil de commande (9) du module de colonne de direction (3) pour verrouiller un angle de rotation de volant de direction.

4. Système de direction à commande électrique selon la revendication 3, **caractérisé en ce que** les appareils de commande (9, 12) sont conçus de telle sorte qu'ils communiquent entre eux de manière cryptée.

5. Système de direction à commande électrique selon l'une des revendications précédentes, **caractérisé en ce que** des raccords de tension d'alimentation (10, 19, 20) de l'actionneur (8) du module de colonne de direction (3) et/ou de l'actionneur (13) du mécanisme de direction (4) sont conçus de telle sorte qu'ils sont court-circuités sans connecteur de tension d'alimentation (11, 21, 22) enfiché.

6. Procédé de protection antivol d'un véhicule automobile comportant un système de direction à commande électrique (1), dans lequel le système de direction à commande électrique (1) comprend un module de colonne de direction (3) et un mécanisme de direction (4), dans lequel le module de colonne de direction (3) présente au moins un capteur d'angle de rotation (7) pour détecter un angle de rotation de volant de direction sur une manette de direction (2), un actionneur (8) pour générer un couple antagoniste sur la manette de direction (2) et au moins un appareil de commande (9), et dans lequel le mécanisme de direction (4) présente au moins un appareil de commande (12), un système d'actionnement (13) pour générer une force de crémaillère sur une crémaillère et au moins un système de capteurs (14) pour détecter ou déterminer une position de crémaillère, dans lequel les appareils de commande (9, 12) sont reliés par des techniques de données,
**caractérisé en ce que**
l'appareil de commande (12) du mécanisme de direction (4) se réveille périodiquement et/ou en fonction de la situation lorsque le véhicule automobile est à l'arrêt et détecte ou détermine une position de crémaillère actuelle au moyen du système de capteurs (14) et la compare à une position de crémaillère précédente, dans lequel l'appareil de commande (12) commande l'actionneur (13) du mécanisme de direction (4) lors d'une modification de la position de crémaillère de telle sorte que celui-ci maintient la position de crémaillère actuelle ou une autre position de crémaillère prédéterminée avec une force de crémaillère maximale.

7. Procédé selon la revendication 6, **caractérisé en ce que** l'appareil de commande (9) du module de colonne de direction (3) se réveille périodiquement et/ou en fonction de la situation lorsque le véhicule automobile est à l'arrêt et détecte un angle de rotation de volant de direction actuel du capteur d'angle de rotation (7) et le compare à un angle de rotation de volant de direction précédent, dans lequel l'appareil de commande (9) commande l'actionneur (8) du module de colonne de direction (3) lors d'une modification de l'angle de rotation de volant de direction de telle sorte que celui-ci maintient l'angle de rotation de volant de direction actuel ou un autre angle de rotation de volant de direction prédéterminé avec un couple maximal

8. Procédé selon la revendication 6 ou 7, **caractérisé en ce que** l'appareil de commande (9) du module de colonne de direction (3) transmet un ordre de commande à l'appareil de commande (12) du mécanisme de direction (4) pour verrouiller une position de crémaillère et/ou
l'appareil de commande (12) du mécanisme de direction (4) transmet un ordre de commande à l'appareil de commande (9) du module de colonne de direction (3) pour verrouiller un angle de rotation de volant de direction.

9. Procédé selon la revendication 8, **caractérisé en ce que** les appareils de commande (9, 12) communiquent entre eux de manière cryptée.

10. Procédé selon l'une des revendications 6 à 9, **caractérisé en ce que,** en retirant un connecteur de tension d'alimentation (11, 21, 22) d'un raccord de tension d'alimentation (10, 19, 20) de l'actionneur (8) du module de colonne de direction (3) et/ou de l'actionneur (13) du mécanisme de direction (4), les raccords de tension d'alimentation (01, 19, 20) sont automatiquement court-circuités.
